(19) **Europäisches Patentamt / European Patent Office / Office européen des brevets**

(11) **EP 3 167 226 B1**

(12) **FASCICULE DE BREVET EUROPEEN**

(45) Date de publication et mention de la délivrance du brevet:
**31.08.2022 Bulletin 2022/35**

(21) Numéro de dépôt: **15734681.8**

(22) Date de dépôt: **07.07.2015**

(51) Classification Internationale des Brevets (IPC):
*F21S 41/147* (2018.01)   *F21S 41/24* (2018.01)
*F21S 41/27* (2018.01)   *F21S 41/32* (2018.01)
*F21S 41/663* (2018.01)

(52) Classification Coopérative des Brevets (CPC):
**F21S 41/147; F21S 41/24; F21S 41/27; F21S 41/321; F21S 41/663**

(86) Numéro de dépôt international:
**PCT/EP2015/065521**

(87) Numéro de publication internationale:
**WO 2016/005409 (14.01.2016 Gazette 2016/02)**

(54) **MODULE LUMINEUX D'UN VÉHICULE AUTOMOBILE**

**BELEUCHTUNGSMODUL FÜR EIN KRAFTFAHRZEUG**

**LIGHTING MODULE FOR A MOTOR VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2014 FR 1456728**

(43) Date de publication de la demande:
**17.05.2017 Bulletin 2017/20**

(73) Titulaire: **Valeo Vision**
**93012 Bobigny Cedex (FR)**

(72) Inventeur: **COURCIER, Marine**
**93012 BOBIGNY CEDEX (FR)**

(74) Mandataire: **Valeo Visibility**
**Service Propriété Industrielle**
**c/o Valeo Vision**
**34, rue Saint André**
**93012 Bobigny (FR)**

(56) Documents cités:
| | |
|---|---|
| **EP-A1- 2 045 515** | **EP-A1- 2 743 567** |
| **EP-A2- 2 280 215** | **EP-A2- 2 818 792** |
| **US-A1- 2006 087 860** | **US-A1- 2006 285 347** |
| **US-A1- 2007 211 487** | **US-A1- 2008 259 620** |
| **US-B1- 6 831 886** | |

**Description**

Le domaine technique de l'invention est celui des modules d'éclairage pour véhicule automobile.

Un véhicule automobile est équipé de projecteurs, ou phares, destinés à illuminer la route devant le véhicule, la nuit ou en cas de luminosité réduite. Ces projecteurs peuvent généralement être utilisés selon deux modes d'éclairage : un premier mode "feux de route" et un deuxième mode "feux de croisement". Le mode "feux de route" permet d'éclairer fortement la route loin devant le véhicule. Le mode "feux de croisement" procure un éclairage plus limité de la route, mais offrant néanmoins une bonne visibilité, sans éblouir les autres usagers de la route. Ces deux modes d'éclairage sont complémentaires. Le conducteur du véhicule doit manuellement changer de mode en fonction des circonstances, au risque d'éblouir par inadvertance un autre usager de la route. En pratique, le fait de changer de mode d'éclairage de façon manuelle peut manquer de fiabilité et s'avérer parfois dangereux. En outre, le mode feux de croisement procure une visibilité parfois insatisfaisante pour le conducteur du véhicule.

Pour améliorer la situation, des projecteurs dotés d'une fonction d'éclairage adaptatif (connue notamment sous l'acronyme anglais AFS pour « Adaptative Frontlighting System ») ont été proposés. Une telle fonction d'éclairage adaptatif est destinée à détecter de façon automatique, par exemple par le traitement d'image acquise par une caméra embarquée, un usager de la route susceptible d'être ébloui par un faisceau d'éclairage émis en mode feux de route par un projecteur, et à modifier le contour de ce faisceau d'éclairage de manière à créer une zone d'ombre à l'endroit où se trouve l'usager détecté. Les avantages d'une telle fonction d'éclairage adaptatif sont multiples : confort d'utilisation, meilleure visibilité par rapport à un éclairage en mode feux de croisement, meilleure fiabilité pour le changement de mode, risque d'éblouissement fortement réduit, conduite plus sûre.

Le document EP2280215 décrit un exemple de système d'éclairage pour projecteur de véhicule automobile, doté d'une fonction d'éclairage adaptatif. Le système comprend quatre modules optiques primaires, dans chacun desquels trois sources de lumière sont associées à trois guides de lumière respectifs, ainsi que quatre éléments optiques secondaires de projection, en l'espèce des lentilles, respectivement associés aux quatre modules optiques primaires. La lumière émise par chaque source de lumière pénètre dans le guide de lumière associé et elle sort par une extrémité de sortie du guide, de forme rectangulaire. La disposition des modules et de leur élément optique secondaire associé fait que la lumière émise par chaque extrémité de sortie de guide optique est projetée par l'élément optique secondaire de manière à former à l'avant du véhicule un segment lumineux vertical. Les segments lumineux produits se superposent partiellement dans la direction horizontale. On joue alors sur l'actionnement des sources de lumières qui peuvent être allumées indépendamment l'une de l'autre, de façon sélective, pour obtenir l'éclairage souhaité.

Le faisceau est ainsi divisé en une pluralité de segments lumineux que l'on peut activer ou désactiver. Le faisceau d'éclairage adaptatif que l'on peut ainsi réaliser uniquement par contrôle électronique d'allumage des sources de lumière, et sans mouvement mécanique d'une pièce de cache additionnelle, est connu sous l'appellation de faisceau matriciel. En outre, la demande de brevet européen EP-A-2743567 divulgue un élément optique primaire pour module d'éclairage selon le préambule de la revendication 1.

Par ailleurs, dans le domaine de l'éclairage, les constructeurs automobiles peuvent chercher à remplacer une lentille par un miroir pour répondre à des questions de style, de chromatisme ou bien de coût. Cependant cela génère un problème d'efficacité d'éclairage, c'est à dire que le flux optique en sortie de système est moins important que le flux à la source, car la réflectivité d'un miroir (85% pour un revêtement aluminium) est en général moins bonne que la transmission d'une lentille.

De même, l'imagerie est en général moins bonne car lorsque l'on passe d'une lentille à un miroir, on réduit le nombre de surfaces optiques de deux à une seule, ce qui laisse moins de variables pour la correction des aberrations optiques.

De plus, dans un système à miroir, le décalage de l'axe optique implique pour les sources de lumière des angles d'ouverture plus grands afin de conserver une bonne efficacité, ce qui génère davantage d'aberrations optiques.

On comprend que l'utilisation d'un réflecteur est à priori défavorable pour un système de faisceau matriciel, dans lequel on cherche à réaliser différents segments lumineux ayant une forme et une netteté bien contrôlée et dans lequel il faut donc chercher à réduire les aberrations optiques.

La présente invention se place dans ce contexte et a pour objet de proposer un module d'éclairage à miroir permettant des faisceaux lumineux dits faisceau matriciel ayant de bonnes performances photométriques et une bonne imagerie, et qui s'intègre facilement dans un dispositif d'éclairage de véhicule automobile.

A cet effet, l'invention propose un élément optique primaire pour module d'éclairage de véhicule automobile selon la revendication 1, comprenant au moins un organe d'entrée de lumière présentant une face d'entrée des rayons lumineux, et dans lequel l'organe d'entrée est relié à une partie correctrice comportant une face de sortie des rayons lumineux, l'organe d'entrée de lumière et la partie correctrice formant une structure monobloc. On peut observer que la face d'entrée de l'organe d'entrée forme ainsi une face d'entrée de l'élément optique primaire et que la face de sortie de la partie correctrice forme une face de sortie de l'élément optique primaire. La partie correctrice est délimitée par au moins trois surfaces parmi lesquelles une surface d'admission par laquelle débouche dans la partie correctrice l'organe d'entrée de lumière via une zone de jonction, au moins une surface intermédiaire et une surface de sortie, la surface de sortie formant la face de sortie de la partie correctrice et la surface intermédiaire formant une surface de réflexion agencée pour réfléchir des rayons issus de l'organe d'entrée de lumière vers la surface convexe. La zone de jonction pourra notamment être de forme rectangulaire.

Grâce à l'invention, des rayons lumineux émis d'une source de lumière disposée au voisinage de la face d'entrée et pénétrant dans l'élément optique primaire via cette face d'entrée se propagent dans l'élément optique primaire par réflexion interne totale, en particulier sur la surface intermédiaire.

L'organe d'entrée est agencé pour former une source secondaire virtuelle à partir de cette source de lumière au niveau de la zone de jonction.

Les aberrations géométriques des rayons issus de cette source secondaire sont en partie corrigées par la surface intermédiaire de façon, à ce que ces rayons, lorsqu'ils sont projetés sur la route, par exemple par un élément optique secondaire, forment une image corrigée de la source secondaire.

Selon l'invention, la partie correctrice est agencée de manière à corriger les aberrations géométriques des rayons lumineux issus de l'organe d'entrée. La surface intermédiaire présente un profil agencé pour réfléchir les rayons lumineux par réflexion interne totale de façon à traiter des aberrations géométriques des rayons lumineux issus de l'organe d'entrée.

Selon l'invention, la zone de jonction de l'organe d'entrée de lumière est orientée vers la surface intermédiaire. On s'assure ainsi que la totalité des rayons issus de l'organe d'entrée est directement ciblée sur la surface intermédiaire, sans rencontrer d'obstacle sur leur trajet, pour que celle-ci joue pleinement son rôle de surface de réflexion totale.

Selon l'invention, la surface de sortie de la partie correctrice présente une forme convexe.

Elle peut également présenter une forme globalement sphérique dont le centre est situé à l'extérieur de la partie correctrice. Par exemple, la partie correctrice peut présenter une forme de boule tronquée suivant deux surfaces de coupe qui se croisent pour former une arête commune disposée à l'intérieur de la boule, et dans ce cas, les parties tronquées de la boule forment les surfaces d'admission et intermédiaire. Avantageusement, la partie correctrice forme une autre surface supplémentaire de traitement d'aberrations géométriques par réfraction. De préférence, le centre de la surface sphérique de la partie correctrice est au voisinage de l'image du centre de la zone de jonction de l'organe d'entrée de lumière avec la surface d'admission par la surface intermédiaire. Par voisinage, on entend une distance inférieure à 5mm. Le centre de la boule se situe à l'extérieur de la partie correctrice. Ainsi les rayons sortant de l'organe d'entrée de lumière sensiblement au niveau du centre de la sphère enveloppant la partie correctrice sont normaux à la face de sortie de celle-ci et ne sont donc pas déviés à l'interface entre la partie correctrice et l'air environnant. Les rayons sortant de l'organe d'entrée de lumière de façon excentrée sont quant à eux légèrement déviés à l'interface de sortie.

La surface intermédiaire présente une forme bombée, notamment vers l'intérieur de la partie correctrice, et elle peut dans ce cas présenter un profil polynomial. Son équation caractéristique est de forme polynomiale, calculée pour que chaque rayon arrive avec un angle d'incidence suffisant pour être totalement réfléchi.

A titre d'exemple, l'équation de la surface peut être

$$z = -84.715(\tfrac{x}{100})^2 + 14.211(\tfrac{y}{100})^2 + 1324.046\left(\tfrac{x}{100}\right)^2\left(\tfrac{y}{100}\right) + 11.714(\tfrac{y}{100})^3 + 2347.586(\tfrac{x}{100})^4 - 3535.841\left(\tfrac{x}{100}\right)^2\left(\tfrac{y}{100}\right)^2 - 151.502(\tfrac{y}{100})^4$$

Dans une alternative non-couverte par les revendications, on pourra également prévoir que la surface intermédiaire soit plane.

Selon d'autres caractéristiques de l'invention, prises seules ou en combinaison, la surface intermédiaire et la zone de jonction sont inclinées l'une par rapport à l'autre notamment d'un angle d'environ 45°. Et les indices de réfraction respectifs de l'organe d'entrée de lumière et de la partie correctrice sont sensiblement identiques. Par "sensiblement identiques", on entend désigner des indices de réfraction égaux au centième près. Ainsi, à la sortie de l'organe d'entrée de lumière, les rayons ne subissent pas ou quasiment pas de réfraction. Dans une forme de réalisation particulière, l'organe d'entrée de lumière et la partie correctrice sont fabriqués dans un même matériau, et notamment dans un même polymère. Par "même matériau", on entend signifier que l'organe d'entrée de lumière et la partie correctrice sont réalisés dans des matériaux au moins issus d'un même polymère de base, par exemple le PMMA. Toutefois, ces matériaux peuvent avoir des charges différentes.

Selon une caractéristique de l'invention, la surface d'admission est plane au moins au niveau de la zone de jonction. En variante, la surface d'admission peut être courbée au moins au niveau de la zone de jonction.

L'organe d'entrée de lumière peut être formé par une micro lentille. Il peut également, tel qu'il sera décrit par la suite, consister en un guide de lumière formant l'organe d'entrée, l'une des faces du guide, supérieure ou inférieure, présentant une forme de portion cylindrique. Il s'agit ainsi d'une face de réflexion interne totale du guide. Le guide de lumière comprend au moins une face d'étalement. On entend par face d'étalement une face conformée de manière à élargir la section transversale du guide de sa face d'entrée jusqu'à la jonction avec la partie correctrice. La face d'étalement peut par exemple être la face opposée à la face ayant une forme de portion cylindrique.

L'élément optique primaire comporte avantageusement une pluralité, notamment quatre, de guides de lumière formant chacun un organe d'entrée de lumière, les guides de lumière étant venus de matière avec la partie correctrice au niveau de la surface d'admission. Dans ce cas, il est notable que l'un des guides d'extrémité de la pluralité de guides comporte une face latérale d'étalement, tous les autres guides présentant des faces latérales planes. Les guides peuvent être juxtaposés de manière à former une rangée.

L'invention concerne en outre un module lumineux d'un véhicule automobile, dans lequel on prévoit un élément optique primaire tel que décrit ci-dessus, et au moins une source de lumière associée à l'organe d'entrée de lumière de l'élément optique primaire. La source de lumière peut être par exemple une diode électroluminescente, ou une diode laser.

Selon différentes caractéristiques de l'invention, prises seules ou en combinaison :

- on prévoit une pluralité de sources de lumière associées chacune à l'élément optique primaire ; dans ce cas, l'élément optique primaire peut comporter une pluralité d'organes d'entrée de lumière, chaque source de lumière étant associée à l'un des organes d'entrée ; en variante, l'élément optique primaire peut comporter un unique organe d'entrée, chaque source étant associée à cet organe ;
- l'élément optique primaire est disposé en regard d'un élément optique secondaire de projection, la zone de jonction de l'organe avec la surface d'admission étant confondue avec une surface focale, plane ou courbe, objet du système de projection formé par les éléments optiques primaire et secondaire ; en variante, la surface de sortie de l'élément optique primaire peut former une surface optique de projection, auquel cas le module lumineux est dépourvu d'un élément optique secondaire distinct de l'élément optique primaire.
- l'élément optique secondaire est formé par un miroir. Ce miroir peut présenter un profil conique asphérisé, ou en variante, un profil parabolique. Avantageusement, le miroir peut être pourvu de stries. On pourra également prévoir que l'élément otique secondaire soit formé par une lentille, voire une ou plusieurs lentille(s) et/ou un ou plusieurs miroir(s).

On note que le module peut présenter trois surfaces de traitement d'aberration géométrique des rayons lumineux dont deux sont portés par l'élément optique primaire. La face de sortie des guides est disposée dans le plan de la surface d'admission de la partie correctrice qui est confondu avec un plan focal objet du système de projection formé par les éléments optiques primaire et secondaire.

Le positionnement du "plan de sortie" des guides (ce "plan de sortie" désignant la surface, non nécessairement plane, dans laquelle s'étendent les sorties des guides) dans le plan focal objet de l'élément de projection permet de créer à l'infini une image des sources lumineuses secondaires à la sortie des guides, produisant ainsi des segments lumineux de formes correspondantes.

On pourra prévoir que les trois surfaces de traitement d'aberrations géométriques se succédant pour un rayon lumineux depuis le guide de lumière jusqu'à la sortie du module sont une surface de réflexion totale interne portée par l'élément optique primaire, une surface de réfraction également portée par l'élément optique primaire, et une seconde surface de réflexion formée par l'élément optique secondaire.

L'invention concerne en outre un système d'éclairage automobile comportant au moins un module lumineux tel qu'évoqué ci-dessus, et un module de commande de la ou des sources de lumière associées à ce module lumineux.

De préférence, le système d'éclairage comporte un module de détection d'un obstacle présent sur la route et à ne pas éblouir. L'allumage ou l'extinction d'une source de lumière est ainsi fonction de la détection d'un tel obstacle de façon par exemple à éclairer la totalité de la route à l'exception dudit obstacle.

Le système peut avantageusement comporter une pluralité de module lumineux selon l'invention.

Il pourra être noté que, avantageusement, le module lumineux du système d'éclairage est agencé pour réaliser une pluralité de bandes lumineuses, chaque bande étant par exemple formée à partir de l'une des sources de lumières de ce module lumineux. L'ensemble des bandes lumineuses réalisées par le système forment un faisceau lumineux dont chacune des bandes est allumable ou éteignable, via l'allumage ou l'extinction de la source de lumière réalisant ladite bande par le module de commande.

D'autres caractéristiques et avantages de l'invention apparaîtront à la lecture de la description détaillée d'un mode de réalisation qui va suivre et pour la compréhension de laquelle on se reportera aux dessins annexés parmi lesquels :

la figure 1 est une vue en perspective d'éléments d'un module d'éclairage, selon un premier mode de réalisation de l'invention, à savoir des éléments optiques primaire et secondaire et une pluralité de sources de lumière disposées en regard de l'élément optique primaire ;
la figure 2 est une vue de côté des éléments du module de la figure 1 ; et

la figure 3 est une vue en coupe de l'élément optique primaire tel qu'illustré sur la figure 1.

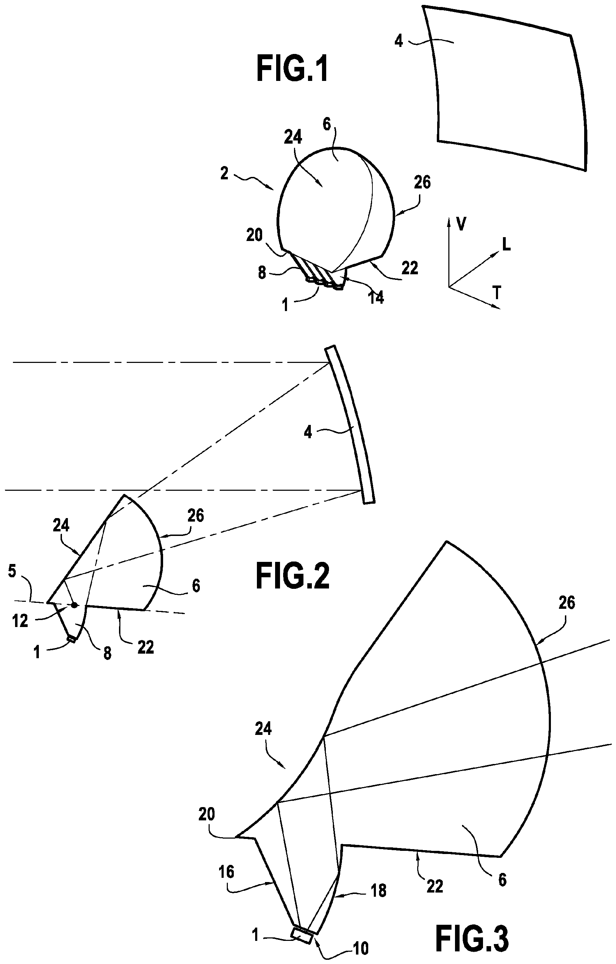

Dans la description qui va suivre, on adoptera à titre non limitatif une orientation longitudinale, verticale et transversale selon l'orientation traditionnellement utilisée dans l'automobile et indiquée par le trièdre L, V, T reporté sur la figure 1.

Tel qu'illustré sur les figures, un module lumineux selon l'invention, destiné à équiper un projecteur de véhicule automobile, comporte principalement une pluralité de sources de lumière primaires 1, un élément optique primaire 2 et un élément optique secondaire de projection 4.

Les sources de lumière primaires sont, dans l'exemple particulier décrit ici, des diodes électroluminescentes. On pourrait toutefois remplacer les diodes électroluminescentes par d'autres sources de lumière, comme des diodes laser.

L'élément optique secondaire 4 est ici un miroir convergent, réalisé dans un matériau qui a un revêtement réfléchissant. Il est disposé et configuré pour projeter à l'infini les images formées au niveau du plan focal 5, représenté en pointillé sur la figure 2, du système de projection que forment ensemble l'élément optique primaire et l'élément optique secondaire.

L'élément optique primaire 2 comporte une partie correctrice 6 et un organe d'entrée de lumière 8 associé aux sources de lumière 1.

Dans le mode de réalisation qui va être explicitement décrit, l'organe d'entrée consiste en un nombre N de guides de lumière 8, respectivement associés aux N sources de lumière primaires 1. Les N guides de lumière sont venus de matière avec la partie correctrice de sorte qu'ils forment une structure monobloc, c'est à dire que ces parties ne sont pas séparables sans destruction de l'une d'entre elles. L'utilisation de guides de lumière permet davantage de tolérance dans le positionnement des sources de lumière, que l'on peut monter sur un support commun, ici non représenté.

On comprend que les guides de lumière 8 et la partie correctrice 6 sont fabriqués dans un même matériau ou sont issus d'un même polymère. A titre d'exemple illustratif, les guides peuvent être fabriqués en PMMA-HT (de l'anglais Polymethyl MethAcrylate High Temperature - polyméthacrylate de méthyle Haute Température) d'indice de réfraction égal à 1,490 et résistant aux hautes températures, et la partie correctrice en PMMA-8N d'indice de réfraction égal à 1,491 et moins coûteux. Les indices de réfraction sont sensiblement les mêmes de sorte que, tel que cela sera décrit ci-après, la lumière passant du guide à la partie correctrice n'est sensiblement pas déviée. Afin de permettre le cheminement des rayons lumineux, le matériau constituant les guides et la partie correctrice est transparent. Il s'agit ici d'un matériau pour lentille optique, tel qu'un matériau organique ou éventuellement du verre.

Dans l'exemple particulier décrit ici, le nombre N de guides est égal à quatre. Bien entendu, ce nombre pourrait être supérieur ou inférieur à quatre. Il est toutefois de préférence strictement supérieur à un, notamment pour l'application du module de l'invention à un système d'éclairage adaptatif. Les guides sont ici juxtaposés les uns après les autres pour former une unique rangée horizontale. En variante, les guides pourraient être juxtaposés deux à deux.

Chaque guide de lumière présente une forme sensiblement prismatique dont une face d'entrée de la lumière 10 et une face opposée de sortie 12, débouchant sur la partie correctrice 6, forment les bases rectangulaires. Chaque guide comporte en outre deux faces latérales 14 qui s'étendent longitudinalement et verticalement, orientées vers l'élément optique secondaire, et deux faces transversales qui s'étendent verticalement et transversalement, sensiblement parallèlement à l'élément optique secondaire, et parmi lesquelles une face transversale antérieure 16 est plus éloignée de l'élément optique secondaire qu'une face transversale postérieure 18.

La face d'entrée 10 de chaque guide est ici plane et elle s'étend en regard d'une source de lumière primaire 1, la distance entre un plan de sortie de la source de lumière et la face d'entrée du guide associé étant avantageusement comprise entre 0,1 millimètres et 1 millimètre. La lumière émise par les sources primaires est destinée à se propager à l'intérieur du guide, depuis la face d'entrée vers la face de sortie, par des réflexions totales successives sur les parois internes des faces transversales et latérales, pour déboucher dans la partie correctrice de l'élément optique primaire. Les faces de sortie des guides, ici rectangulaires, constituent alors des sources de lumière secondaires destinées à produire des faisceaux lumineux respectifs en sortie de module, après traitement de la lumière par la partie correctrice. Les faces peuvent prendre une forme plane ou courbe, de forme quelconque, et elles sont avantageusement formées pour produire une forme souhaitée de faisceau lumineux en sortie de module lumineux. A titre d'exemple, on pourra donner aux faces latérales, et aux faces transversales antérieure et postérieure, des formes d'étalement, planes ou courbes, conformées de manière à élargir la section transversale du guide de lumière correspondant, depuis sa face d'entrée jusqu'à sa face de sortie.

La face transversale antérieure 16 prend la forme d'une face droite tandis que la face transversale postérieure 18, tel que cela est visible sur la figure 3, prend la forme d'une face incurvée. L'inclinaison des faces transversales l'une par rapport à l'autre permet de dimensionner la taille de la face de sortie et donc de l'image projetée par la source de lumière secondaire.

La partie correctrice 6 est formée par une boule tronquée par deux surfaces de coupe. Ces surfaces de coupe se croisent en une arête commune 20 qui s'étend à l'intérieur de la boule de telle sorte que le centre de la boule se situe à l'extérieur de la partie correctrice. Les deux surfaces définis par ces surfaces de coupe, et qui s'étendent depuis l'arête commune jusqu'au contour de la boule, sont inclinées l'une par rapport à l'autre d'un angle d'environ 45°.

De la sorte, la partie correctrice présente la forme d'une portion de boule délimitée par trois surfaces que l'on appellera, en référence à leur fonction telle qu'elle sera expliquée en détail plus tard, une surface d'admission 22, une surface intermédiaire 24 et une surface de sortie 26.

Une première surface de coupe de la boule génère la surface d'admission, sensiblement plane, qui forme une face d'accueil pour les guides de lumière rapportés et alignés sur cette surface d'admission. La surface d'admission comporte les faces de sortie des guides. La distance séparant les éléments optiques primaire et secondaire est strictement supérieure à zéro et adaptée pour que la zone jonction des faces de sortie des guides et de la surface d'admission coïncide avec le plan focal objet du système de projection formé par l'élément optique primaire et l'élément optique secondaire. Grâce à cela, le module selon l'invention, et ses deux éléments optiques primaire et secondaire, est adapté pour créer une image à l'infini des sources de lumière secondaires formées aux extrémités de sortie des guides.

La deuxième surface de coupe trace le contour de la surface intermédiaire qui, tel que cela est visible sur la figure 3, est bombée vers l'intérieur de la partie correctrice. En effet, afin d'obtenir une réflexion interne totale des rayons sur cette surface intermédiaire, on prévoit d'incurver cette surface selon une équation polynomiale, dont les paramètres dépendront par exemple de la dimension de la partie correctrice, de l'angle entre la surface d'admission et la surface intermédiaire.

L'équation pourrait être la suivante :

$$z = -84.715(\tfrac{x}{100})^2 + 14.211(\tfrac{y}{100})^2 + 1324.046\left(\tfrac{x}{100}\right)^2\left(\tfrac{y}{100}\right) + 11.714(\tfrac{y}{100})^3 + 2347.586(\tfrac{x}{100})^4 - 3535.841\left(\tfrac{x}{100}\right)^2\left(\tfrac{y}{100}\right)^2 - 151.502(\tfrac{y}{100})^4$$

La surface intermédiaire est orientée de manière à ce que les faces de sortie des guides de lumière soient toutes tournées vers cette surface pour que l'intégralité des rayons lumineux entre en contact avec la surface intermédiaire de réflexion totale.

La surface de sortie de la partie correctrice est formée par la paroi extérieure de la boule et elle est tournée vers le miroir formant l'élément optique secondaire.

On va maintenant décrire fonctionnellement les différentes parties de l'élément optique primaire, en s'appuyant sur le trajet des rayons illustré sur la figure 3.

En fonctionnement, les rayons lumineux émis par une source de lumière 1 pénètrent, au moins partiellement, dans le guide associé 8 par sa face d'entrée 10. Ces rayons sont canalisés dans le guide par des réflexions totales successives et se propagent à l'intérieur du guide depuis sa face d'entrée jusqu'à sa face de sortie, éventuellement par réflexions successives sur les faces transversales (visibles sur la vue de coupe de la figure 3) ou sur les faces latérales.

A l'interface entre la face de sortie du guide et la surface d'admission de la partie correctrice 6, les rayons sortant du guide pénètrent dans la partie correctrice sans être déviés. L'ensemble des rayons est alors dirigé avec précision vers la surface de réflexion interne pour être réfléchi en direction de la surface de sortie.

La surface d'admission est conformée pour que la partie du "plan de sortie" dans laquelle s'étendent les sorties des guides soit orientée vers la surface intermédiaire afin que les rayons sortant du guide partent en direction de cette surface. Par ailleurs, la forme rectangulaire de la face de sortie du guide, et ses dimensions, évite que les rayons sortant du guide partent dans une autre direction que celle menant à la surface polynomiale de réflexion et qu'ils n'échappent ainsi à l'étape intermédiaire de réflexion interne entre l'admission et la sortie des rayons dans la partie correctrice. On s'assure dans la construction du module que l'extrémité de la face transversale postérieure 18 au niveau de la face de sortie du guide se referme vers l'extrémité correspondante de la face transversale antérieure 16 de manière à ce que les rayons issus de la diode et longeant l'extrémité de la face transversale postérieure sans être déviés dans le guide se propagent bien en direction de la surface de réflexion interne. Le contrôle de la diffusion des rayons pour les cibler vers la surface de réflexion interne est facilité par l'absence de réfraction entre les guides et la partie correctrice.

Les rayons sont intégralement réfléchis par la forme polynomiale de la surface de réflexion interne en direction de la surface de sortie. Les rayons se dirigent ensuite en lignes droites vers la surface de sortie de la partie correctrice. Du fait que la boule soit centrée sur un point virtuel correspondant au point image d'une source secondaire obtenu par symétrie par rapport à la surface polynomiale, les rayons arrivent au contact de la surface de sortie de l'élément optique primaire sensiblement normalement par rapport à cette paroi sphérique, et ils sont intégralement réfractés, et ce sans altération de l'image qu'ils forment, vers l'élément secondaire de projection 4.

Les rayons sont réfléchis par le miroir formant cet élément secondaire de projection pour former à l'infini des images correspondant à celles de la source de lumière secondaire, c'est à dire des faisceaux de rayons parallèles formant des segments lumineux de forme globalement rectangulaire.

On comprend que la partie correctrice porte deux surfaces de réduction des aberrations géométriques pour les rayons lumineux, à savoir la surface intermédiaire qui joue le rôle de surface de réflexion totale interne et la surface de sortie qui joue le rôle de surface de réfraction.

La description qui précède explique clairement comment l'invention permet d'atteindre les objectifs qu'elle s'est fixés et notamment de proposer un module lumineux qui facilite la mise en place d'un système d'éclairage adaptatif efficace.

D'autres variantes pourront être mises en œuvre sans sortir du contexte de l'invention, comme la réalisation de l'organe d'entrée de lumière par une pluralité de guides, réalisés ou non sous forme monobloc, ou une pluralité de microlentilles.

On observe que dans le module d'éclairage selon l'invention, les rayons lumineux subissent successivement une réflexion totale, une réfraction et une seconde réflexion, étant entendu qu'ils connaissant également une réfraction initiale à l'entrée dans les guides, et des réflexions totales sur les parois des guides.

Le rôle de la partie correctrice 6, en coopération avec l'organe d'entrée de lumière, est double. Elle permet d'une part d'améliorer l'efficacité optique du module lumineux. L'entrée des guides a pour effet de réduire l'ouverture des rayons lumineux émis par les sources de lumière primaires, les rayons pénétrant dans les guides étant rabattus par les lois de la réfraction. On sait qu'un rayon lumineux pénétrant dans un guide optique avec une ouverture $\alpha$ par rapport à la normale à la surface d'entrée de ce guide est rabattu vers l'axe longitudinal du guide par les lois de la réfraction en un angle $\arcsin(1/n*\sin(\alpha))$. De la sorte, on peut calibrer la forme et les dimensions d'une source de lumière secondaire au niveau de la face de sortie de chacun des guides de lumière. En outre, à l'interface entre chaque guide de lumière et la partie correctrice 6, les rayons lumineux ne sont pas déviés en raison de la connexion entre les guides et la partie correctrice 6. Grâce à cela, l'ouverture réduite des rayons est conservée, et on peut cibler le cheminement des rayons en direction de la surface de réflexion interne. La partie correctrice offre avantageusement une surface intermédiaire de réflexion totale entre l'admission et la sortie de la boule par réfraction, pour améliorer le traitement des aberrations géométriques des rayons lumineux. Enfin, ces rayons lumineux sortant de la partie correctrice 6 par la surface de sortie ne sont pas ou peu déviés grâce à la forme de dôme sphérique de la surface de sortie, car celle-ci est centrée sur l'image de la source secondaire obtenue par symétrie par rapport à la surface de réflexion interne.

L'ensemble formé par les diodes et les guides de lumière génère, au niveau de la sortie des guides, des segments lumineux rectangulaires d'éclairement qui sont ensuite imagés à l'infini à l'aide de deux surfaces réfléchissantes et d'une surface de réfraction. Les deux surfaces réfléchissantes permettent la bonne correction des aberrations optiques de sorte qu'on peut former alors des segments lumineux de netteté et de forme très finement contrôlées afin de maximiser la visibilité sur la route de nuit et le confort sans éblouir les autres utilisateurs. Le fait qu'une des deux surfaces réfléchissantes soit une surface dioptrique travaillant en réflexion totale permet de limiter les pertes à la réflexion sur cette surface comparées à ce qu'elles seraient sur un miroir. On garde donc dans ce système à deux surfaces réfléchissantes un niveau faible de pertes, similaire à ce qu'on aurait si le système n'était composé que d'un seul miroir. Avantageusement, le module selon l'invention comporte également une surface de réfraction formée par la surface de sortie de l'élément optique primaire, ce qui participe en outre à la correction des aberrations de champ. On a donc, avec uniquement deux éléments optiques et dans un système relativement compact, trois surfaces optiques pour l'imagerie des segments lumineux tout en conservant un niveau de pertes relativement faible pour un système à miroir, préféré à un système à lentille pour des raisons précédemment évoqués, parmi lesquelles le coût.

Ainsi, le module lumineux de l'invention aune excellente efficacité optique. Les flux lumineux émis par les sources subissent peu de perte et sont récupérés en grande partie en sortie du module pour créer des faisceaux lumineux aptes à former des segments lumineux.

En outre, le module lumineux peut produire des segments lumineux dont les formes sont parfaitement contrôlées. En particulier, les frontières verticales des segments lumineux ont une forme et une netteté bien maîtrisées.

## Revendications

1. Élément optique primaire pour module d'éclairage de véhicule automobile, du type comportant au moins un organe d'entrée de lumière (8) présentant une face d'entrée de rayons lumineux et une partie correctrice (6) présentant une face de sortie de rayons lumineux, la partie correctrice étant agencée de manière à corriger les aberrations géométriques des rayons issus de l'organe d'entrée, l'organe d'entrée de lumière et la partie correctrice formant une structure monobloc délimitée par des surfaces parmi lesquelles une surface d'admission (22) par laquelle débouche dans la partie correctrice l'organe d'entrée de lumière via une zone de jonction (12) et une surface de sortie (26), la surface de sortie formant la face de sortie de la partie correctrice et présentant une forme convexe,

caractérisé en ce que ladite structure monobloc est en outre délimitée par une surface intermédiaire (24), ladite surface intermédiaire formant une surface de réflexion agencée pour réfléchir des rayons issus de l'organe d'entrée de lumière vers la surface de sortie de la partie correctrice et présentant un profil agencé pour réfléchir les rayons lumineux par réflexion interne totale de façon à traiter lesdites aberrations géométriques des rayons lumineux issus de l'organe d'entrée,

la zone de jonction (12) de l'organe d'entrée étant orientée vers la surface intermédiaire (24) de sorte que la totalité des rayons issus de l'organe d'entrée est directement ciblée sur la surface intermédiaire.

2. Elément optique primaire selon la revendication 1, **caractérisé en ce que** la surface de sortie (26) de la partie correctrice (6) forme une surface supplémentaire de traitement d'aberrations géométriques par réfraction.

3. Élément optique primaire selon l'une des revendications précédentes, **caractérisé en ce que** la surface de sortie (26) de la partie correctrice présente une forme globalement sphérique dont le centre est situé à l'extérieur de la partie correctrice.

4. Élément optique primaire selon la revendication précédente, **caractérisé en ce que** le centre de la surface sphérique de la partie correctrice (6) est au voisinage de l'image du centre de la zone de jonction de l'organe d'entrée de lumière (8) avec la surface d'admission par la surface intermédiaire (24).

5. Élément optique primaire selon l'une des revendications précédentes, **caractérisé en ce que** la surface intermédiaire (24) présente une forme bombée, notamment vers l'intérieur de la partie correctrice (6).

6. Élément optique primaire selon l'une des revendications précédentes, **caractérisé en ce que** la surface intermédiaire (24) et la zone de jonction sont inclinées l'une par rapport à l'autre, notamment d'un angle d'environ 45°.

7. Élément optique primaire selon l'une des revendications précédentes **caractérisé en ce que** les indices de réfraction respectifs de l'organe d'entrée de lumière (8) et de la partie correctrice (6) sont sensiblement identiques.

8. Élément optique primaire selon l'une des revendications précédentes, **caractérisé en ce qu'**il comporte un guide de lumière formant l'organe d'entrée, l'une des faces du guide, supérieure ou inférieure, présentant une forme de portion cylindrique.

9. Module lumineux d'un véhicule automobile, **caractérisé en ce qu'**il comprend un élément optique primaire (2) selon l'une des revendications précédentes, et au moins une source de lumière associée à l'organe d'entrée de lumière (8) dudit élément optique primaire.

10. Module lumineux selon la revendication précédente, **caractérisé en ce qu'**il comprend une pluralité de sources de lumière associées chacune à l'élément optique primaire.

11. Module lumineux selon l'une des revendications 9 ou 10, **caractérisé en ce que** l'élément optique primaire est disposé en regard d'un élément optique secondaire de projection (4), la zone de jonction (12) de l'organe avec la surface d'admission étant confondue avec une surface focale (5) objet du système de projection formé par les éléments optiques primaire et secondaire.

12. Module lumineux selon la revendication précédente, **caractérisé en ce que** l'élément optique secondaire est formé par un miroir.

13. Système d'éclairage automobile comportant au moins un module lumineux selon l'une des revendications 9 à 12, 13, et un module de commande de la ou des sources de lumière associées à ce module lumineux.

**Patentansprüche**

1. Primäres optisches Element für ein Beleuchtungsmodul eines Kraftfahrzeugs, des Typs, welcher wenigstens ein Lichteintrittsorgan (8), das eine Eintrittsseite der Lichtstrahlen aufweist, und einen Korrekturteil (6), der eine Austrittsseite der Lichtstrahlen aufweist, umfasst, wobei der Korrekturteil so eingerichtet ist, dass er die geometrischen Aberrationen der vom Eintrittsorgan kommenden Strahlen korrigiert,

wobei das Lichteintrittsorgan und der Korrekturteil eine einstückige Struktur bilden, die von Flächen begrenzt wird, darunter eine Einlassfläche (22), durch welche das Lichteintrittsorgan über einen Verbindungsbereich (12) in den Korrekturteil mündet, und eine Austrittsfläche (26), wobei die Austrittsfläche die Austrittsseite des Korrekturteils bildet und eine konvexe Form aufweist, **dadurch gekennzeichnet, dass** die einstückige Struktur außerdem von einer Zwischenfläche (24) begrenzt wird, wobei diese Zwischenfläche eine Reflexionsfläche bildet, die dazu eingerichtet ist, vom Lichteintrittsorgan kommende Strahlen in Richtung der Austrittsfläche des Korrekturteils zu reflektieren, und ein Profil aufweist, das dazu eingerichtet ist, die Lichtstrahlen durch innere Totalreflexion zu reflektieren, um die geometrischen Aberrationen der vom Eintrittsorgan kommenden Lichtstrahlen zu bearbeiten,

wobei der Verbindungsbereich (12) des Eintrittsorgans zur Zwischenfläche (24) hin ausgerichtet ist, derart, dass die Gesamtheit der vom Eintrittsorgan kommenden Strahlen direkt auf die Zwischenfläche gerichtet wird.

2. Primäres optisches Element nach Anspruch 1, **dadurch gekennzeichnet, dass** die Austrittsfläche (26) des Korrekturteils (6) eine zusätzliche Fläche zur Bearbeitung geometrischer Aberrationen durch Brechung bildet.

3. Primäres optisches Element nach einem der vorhergehenden Ansprüche, **dadurch gekennzeichnet, dass** die Austrittsfläche (26) des Korrekturteils im Wesentlichen eine Kugelform aufweist, deren Mittelpunkt sich außerhalb des Korrekturteils befindet.

4. Primäres optisches Element nach dem vorhergehenden Anspruch, **dadurch gekennzeichnet, dass** sich der Mittelpunkt der kugelförmigen Fläche des Korrekturteils (6) in der Nähe der Abbildung des Mittelpunktes des Verbindungsbereichs des Lichteintrittsorgans (8) mit der Einlassfläche durch die Zwischenfläche (24) befindet.

5. Primäres optisches Element nach einem der vorhergehenden Ansprüche, **dadurch gekennzeichnet, dass** die Zwischenfläche (24) eine gewölbte, insbesondere zum Inneren des Korrekturteils (6) hin gewölbte Form aufweist.

6. Primäres optisches Element nach einem der vorhergehenden Ansprüche, **dadurch gekennzeichnet, dass** die Zwischenfläche (24) und der Verbindungsbereich relativ zueinander geneigt sind, insbesondere um einen Winkel von ungefähr 45°.

7. Primäres optisches Element nach einem der vorhergehenden Ansprüche, **dadurch gekennzeichnet, dass** die jeweiligen Brechungsindizes des Lichteintrittsorgans (8) und des Korrekturteils (6) im Wesentlichen gleich sind.

8. Primäres optisches Element nach einem der vorhergehenden Ansprüche, **dadurch gekennzeichnet, dass** es einen Lichtleiter umfasst, der das Eintrittsorgan bildet, wobei eine der Seiten des Leiters, die obere oder die untere, eine Form eines zylindrischen Abschnitts aufweist.

9. Leuchtmodul eines Kraftfahrzeugs, **dadurch gekennzeichnet, dass** es ein primäres optisches Element (2) nach einem der vorhergehenden Ansprüche und wenigstens eine Lichtquelle, die dem Lichteintrittsorgan (8) des primären optischen Elements zugeordnet ist, umfasst.

10. Leuchtmodul nach dem vorhergehenden Anspruch, **dadurch gekennzeichnet, dass** es mehrere Lichtquellen umfasst, die jeweils dem primären optischen Element zugeordnet sind.

11. Leuchtmodul nach einem der Ansprüche 9 oder 10, **dadurch gekennzeichnet, dass** das primäre optische Element gegenüber einem sekundären optischen Projektionselement (4) angeordnet ist, wobei der Verbindungsbereich (12) des Organs mit der Einlassfläche mit einer Brennfläche (5) zusammenfällt, die Gegenstand des Projektionssystems ist, das von dem primären und dem sekundären optischen Element gebildet wird.

12. Leuchtmodul nach dem vorhergehenden Anspruch, **dadurch gekennzeichnet, dass** das sekundäre optische Element von einem Spiegel gebildet wird.

13. Beleuchtungssystem eines Kraftfahrzeugs, welches wenigstens ein Leuchtmodul nach einem der Ansprüche 9 bis 12 und ein Steuerungsmodul der Lichtquelle(n), die diesem Leuchtmodul zugeordnet ist (sind), umfasst.

**Claims**

1. A primary optical component for an automotive-vehicle lighting module, of the type including at least one light-entrance member (8) having a light-ray entrance face and a corrective portion (6) having a light-ray exit face, the corrective portion being arranged so as to correct the geometric aberrations of light rays issued from the entrance member,

the light-entrance member and the corrective portion forming an integral structure bounded by surfaces including an admission surface (22) through which the light-entrance member opens onto the corrective portion via a zone of junction (12), and an exit surface (26), the exit surface forming the exit face of the corrective portion and having a convex shape,

**characterized in that** said integral structure is further bounded by an intermediate surface (24), said intermediate surface forming a reflective surface arranged to reflect rays issued from the light-entrance member toward the exit surface of the corrective portion and having a profile arranged to reflect the light rays by total internal reflection so as to treat said geometric aberrations of light rays issued from the entrance member, the zone of junction (12) of the entrance member being oriented toward the intermediate surface (24) so that all of the rays issued from the entrance member are targeted on the intermediate surface directly.

2. The primary optical component as claimed in claim 1, **characterized in that** the exit surface (26) of the corrective portion (6) forms an additional surface for treating geometric aberrations by refraction.

3. The primary optical component as claimed in one of the preceding claims, **characterized in that** the exit surface (26) of the corrective portion has a shape that is spherical on the whole and the center of which is located outside of the corrective portion.

4. The primary optical component as claimed in the preceding claim, **characterized in that** the center of the spherical surface of the corrective portion (6) is in the vicinity of the image of the center of the zone of junction of the light-entrance member (8) with the admission surface by the intermediate surface (24).

5. The primary optical component as claimed in one of the preceding claims, **characterized in that** the intermediate surface (24) has a curved shape, especially a curved shape that is curved toward the interior of the corrective portion (6).

6. The primary optical component as claimed in one of the preceding claims, **characterized in that** the intermediate surface (24) and the zone of junction are inclined one with respect to the other, especially by an angle of about 45°.

7. The primary optical component as claimed in one of the preceding claims, **characterized in that** the respective refractive indices of the light-entrance member (8) and the corrective portion (6) are substantially identical.

8. The primary optical component as claimed in one of the preceding claims, **characterized in that** it includes a light guide forming the entrance member, one of the upper or lower faces of the guide having the shape of a portion of a cylinder.

9. A luminous module for an automotive vehicle **characterized in that** it comprises a primary optical component (2) as claimed in one of the preceding claims, and at least one light source associated with the light-entrance member (8) of said primary optical component.

10. The luminous module as claimed in the preceding claim, **characterized in that** it comprises a plurality of light sources each associated with the primary optical component.

11. The luminous module as claimed in either of claims 9 and 10, **characterized in that** the primary optical component is placed facing a projecting secondary optical component (4), the zone of junction (12) of the member with the admission surface being coincident with an object focal surface (5) of the projecting system formed by the primary and secondary optical components.

12. The luminous module as claimed in the preceding claim, **characterized in that** the secondary optical component is formed by a mirror.

13. An automotive lighting system including at least one luminous module as claimed in one of claims 9 to 12, and a module for controlling the one or more light sources associated with this luminous module.

FIG.1

FIG.2

FIG.3

## RÉFÉRENCES CITÉES DANS LA DESCRIPTION

**Documents brevets cités dans la description**

- EP 2280215 A
- EP 2743567 A